# EUROPEAN PATENT APPLICATION

(11) **EP 3 926 515 A1**
(43) Date of publication of application: **22.12.2021**
(21) Application number: 20180839.1
(22) Date of filing: 18.06.2020
(51) Int. Cl.: G06F 40/35, G06N 5/02

(54) **A COMPUTER- IMPLEMENTED METHOD OF STRUCTURING CONTENT FOR TRAINING AN ARTIFICIAL INTELLIGENCE MODEL**

(71) Applicant: Koninklijke Philips N.V., 5656 AG Eindhoven (NL)
(72) Inventor: PADUKONE, Rishab Pradeep, 5656 AE Eindhoven (NL); SISODIA, Rajendra Singh, 5656 AE Eindhoven (NL); SREENIVASAN, Rithesh, 5656 AE Eindhoven (NL); ANAND, Shreya, 5656 AE Eindhoven (NL); MOORKAN, Thasneem, 5656 AE Eindhoven (NL); ARORA, Tilak Raj, 5656 AE Eindhoven (NL)
(74) Representative: Philips Intellectual Property & Standards

(57) **Abstract**

According to an aspect, there is provided a computer-implemented method of structuring content for training an artificial intelligence model, the method comprising: receiving (S11) input content associated with medical device documentation; converting (S12) the input content to a data interchange format; extracting (S13) a plurality of key terms from the converted input content; extracting (S14) a plurality of key phrases from the converted input content; receiving (SI5) validation of the key terms and the key phrases from a supervisor; and building (S16) a dialogue, for training the artificial intelligence model, based on at least some of the validated key terms and the validated key phrases, wherein the dialogue comprises a series of statements.

## Description

### FIELD OF THE INVENTION

The present invention relates to structuring content for training an artificial intelligence model. The content may be associated with documentation applicable to the medical and healthcare field.

### BACKGROUND OF THE INVENTION

Technical documents may be provided to provide diagnostic, how-to-use, functional features explanation and instructions. These are written by technical writers as instruction for use (IFU) manuals, service manuals, and as knowledge repository on system functions. Such documents may be provided in the medical or healthcare field and may, for example, be instruction manuals for diagnosis machines. End users such as clinicians, hospital technicians and service engineers use these documents for usages as per the instructions therein.

Chatbots and artificial intelligence based Question-Answer systems may provide end users with the relevant instructions for specific topics/issues. The relevant instructions may be retrieved from these technical documents, provided the documents are structured such that a chatbot/AI may process the documents. Currently it is a very manual, cumbersome and time consuming process to convert the unstructured documents into "ready to process structure by AI system", i.e. structured documents that may be processed by AI systems.

It is therefore desirable to convert content, such as documentation, into a structure that may be processed by an AI system.

### SUMMARY OF THE INVENTION

According to an embodiment of a first aspect, there is provided a method of structuring content for training an artificial intelligence model, the method comprising: receiving input content associated with medical device documentation; converting the input content to a data interchange format; extracting a plurality of key terms from the converted input content; extracting a plurality of key phrases from the converted input content; receiving validation of the key terms and the key phrases from a supervisor; and building a dialogue, for training the artificial intelligence model, based on at least some of the validated key terms and the validated key phrases, wherein the dialogue comprises a series of statements.

A dialogue for training an artificial intelligence (AI) model may therefore be built from input content. In other words, input content, such as, for example, an unstructured document, may be provided in such a format for training an artificial intelligence model, such as, for example, a chatbot or Question-Answer (QA) system. It may therefore be possible to take an unstructured document and provide it in a format and structure that an AI system is able to process. Furthermore, the processing of the input content is verified by a supervisor so as to ensure that appropriate terms and phrases are extracted from the content, thereby increasing the accuracy of the dialogue and the resulting AI system.

The dialogue comprises some or all of the key terms and key phrases which are identified and extracted from the input content and validated by the user. A key phrase may be a series of terms comprising three to five terms. The method may comprise storing the extracted key terms and the extracted key phrases. The extracted terms and phrases may be presented to the supervisor so that the supervisor may verify the terms and phrases. The method therefore comprises interaction with an individual and causes the user to assess the validity of the dialogue, thereby altering the behaviour of the user. The behaviour of the computer on which the method is implemented is also altered as a result of embodiments of aspects of the invention. For example, alteration may occur due to the input received from the supervisor to verify the vocabulary of the dialogue, and by the resulting dialogue which may be used to train an AI model, when the input content (for example, in PDF format) would not have otherwise been able to. The processing and performance of the computer may therefore also be improved.

The built dialogue may be self-contained and regulatory approved for a specific query for the said medical device to which the input content corresponds. The specific query may be received from a user of the AI system. That is, a key element of the dialogue (or part of the dialogue) built from embodiments of aspects is that they may comprise a piece of information that is self-contained for a specific query for the said medical device. The information that is extracted is exactly the information required for a query from a user and is regulatory approved. This may be ensured by the verification by the supervisor.

When applied to the medical or healthcare field, embodiments of aspects of the invention may be particularly beneficial since instructions for using devices and diagnosis machines in these fields are very important. Such instructions may also be the subject of regulations and so it may be necessary for any AI system providing user instructions meets the relevant regulations. These regulations may be met by the built dialogue for input content associated with medical device documentation.

The method may comprise: pre-processing the dialogue. The pre-processing may comprise one or more of: cleaning the dialogue; annotating the dialogue; and normalizing the dialogue. The dialogue may therefore be pre-processed so that the dialogue more accurately reflects the input content and is provided in a more appropriate manner for subsequent processing, for example, by removing superfluous terms. The pre-processed dialogue may still be self-contained and regulatory approved for a specific query for the said medical device to which the input content corresponds. For example, the dialogue may be annotated and/or normalized in view of regulatory approval.

Cleaning the dialogue may comprise one or more of: stop word removal, and capitalization. Annotating the dialogue may comprise one or more of: Part of Speech tagging, and tokenization. Normalizing the dialogue may comprise one or more of: stemming, and lemmatization.

The method may comprise: enriching the dialogue. The enriching may comprise one or more of: identifying and extracting a term from a general text corpus associated with one or more of the extracted key terms (and/or terms of the extracted key phrases); identifying and extracting a phrase from a general text corpus associated with one or more of the extracted key phrases (and/or terms of the extracted key phrases); identifying and extracting an out of vocabulary term associated with the input content; identifying and extracting a domain related term associated with the input content; and adding an out of vocabulary term by providing a domain specific equivalent key term. Further key terms and phrases relevant to the input content may therefore be added to the dialogue so as to improve the dialogue by making it more accurately reflect the input content and to add alternative terms and/or phrases that may not be included in the content but may be relevant to it. The further terms/phrase may be synonyms of the extracted key terms/phrases. The domain related terms associated with the input content and/or the plurality of out of vocabulary terms associated with the input content may be predetermined and, for example, input by the supervisor.

The out of vocabulary words may be added by providing domain specific key words and domains. For example, some terms used in device documentation may be specific to a particular manufacturer and another manufacturer may use alternative terms. These alternatives may be provided as synonyms of technical words which may not otherwise be found as a domain key word list.

The method may comprise: training the artificial intelligence model using the dialogue. The training may comprise: for each statement of a plurality of statements of the dialogue, splitting the statement into a plurality of individual words; determining a word-embedding vector for each word of the plurality of individual words of the statement; determining a term frequency - inverse document frequency score for each word of the plurality of individual words of the statement; multiplying, for each word of the plurality of individual words, the word embedding vector and the respective term frequency - inverse document frequency score to acquire a weighted word vector for each word of the plurality of individual words of the statement; averaging the plurality of weighted word vectors to acquire a statement vector corresponding to the statement of the dialogue; and assembling a plurality of statement vectors corresponding to the plurality of statements of the dialogue to provide the trained artificial intelligence model. The dialogue may therefore be used to train the AI model.

The dialogue used to train the model may be the dialogue of any stage of the processing according to embodiments of aspects. For example, the dialogue may be the dialogue initially built from the input content, the dialogue may be the pre-processed dialogue or the dialogue may be the enriched dialogue. The model trained by the pre-processed and enriched dialogue may be more accurate than a model trained by the initially built dialogue. Thus, the plurality of statements of the dialogue used to train the model may, for example have received tokenization and stop word removal processing. A statement vector may be determined for a plurality of the statements of the dialogue and the resulting plurality of statement vectors may be assembled to provide the trained model. The plurality of statements may comprise all of or the majority of (for example, 90%) of the statements of the dialogue.

Additionally or alternatively to the TF-IDF score determined for the words of each statement of the plurality of statements, another weight may be determined and used to determine weighted word vectors, such as, for example a Part of Speech weight (POS Tag). Any method that implements the domain specific information system inverse frequency based approach may be used, including, for example, entropy detection.

The artificial intelligence model may be trained in a language of a predetermined number of languages. The language of the AI model may correspond to the language of the dialogue used to train the artificial intelligence model. That is, the model may be trained in any language of a number of predetermined languages and the language for training the model may be determined by the language of the dialogue. For example, if the dialogue is provided in English, then the model may be trained in English.

The method may comprise: receiving a query from a user; pre-processing the query; determining a query vector of the query; identifying an intent of the query by comparing the query vector with the statement vectors of the trained artificial intelligence model; and determining a response to the query based on the determined intent. Thus a query may be received from a user of the AI system (such as, for example, the chatbot or QA system), the query may be processed in the same way as the dialogue and the processed query may be used with the trained model to determine an appropriate response to the query. It may therefore be possible to provide data from input content in response to a user query via an AI system. The user may be a customer or operator of a medical device.

Identifying the intent may comprise calculating a cosine distance between the query vector and each statement vector of a plurality of the statement vectors of the trained artificial intelligence model. Determining the response may comprise selecting a statement of the dialogue nearest to the statement corresponding to the statement vector which matches the query vector. In other words, the processed query may be passed to a match method which uses distance measures (cosine similarity) to identify the nearest (shortest distance) response present in the trained model. The nearest response may therefore be a statement in the dialogue corresponding to the statement vector that is the shortest distance from the query vector. An appropriate response to the user's query may therefore be provided.

The query may be received in a language of a predetermined number of languages; and an artificial intelligence model corresponding to the language may be used to determine the response. In other words, a model may be trained in a number of languages so as to acquire a number of different language models. The language model corresponding to the language of the query may be used to determine the response so that the response may be determined and provided to the user in the same language as the user's response.

The different language models may be trained on dialogue in the corresponding language. This may be acquired by determining the dialogue from input content corresponding to that language, or it may be acquired by translating the dialogue from another language into the required language. For example, English input content may be used to determine a dialogue in English, which then may be used to train an English language model. Alternatively, an English dialogue may be translated to Dutch to train a Dutch language model which may be used to determine a response to a query received in Dutch. This translation may be performed by a bilingual/multilingual supervisor or the translation may be a machine translation. A machine translation may be validated by a bilingual/multilingual supervisor to ensure that the translation is correct. The user may be an expert in the field of the input content and may verify the translated dialogue to ensure that the translated dialogue meets regulatory law. Multiple different language models may be trained from the same dialogue using translation and validation.

The input content may have a structure comprising a plurality of sections. Key terms may be extracted from one or more sections of the plurality of sections. Key phrases may be extracted from one or more sections of the plurality of sections. The key terms and the key phrases for a given section may be stored in accordance with an identifier for the given section. The input content may therefore be provided with sections and section identifiers, which may be used to store the extracted key terms and key phrases such that the dialogue has sections and section identifiers corresponding to the input content. Any structure of the input content may therefore be maintained in the extracted and converted content, and carried through to the dialogue. The section identifier may be a title of the section and/or a tag associated with the section.

The input content may have a structure comprising a plurality of sections. Each section of the plurality of sections may comprise a section identifier. Key terms may be extracted from one or more sections of the plurality of sections with respect to the section identifiers. Key phrases may be extracted from one or more sections of the plurality of sections with respect to the section identifiers. Thus, a section identifier may be used to extract key terms and/or key phrases which correspond to the section identifier.

The validation may comprise one or more of: receiving approval of an extracted key term; receiving amendment of an extracted key term; receiving rejection of an extracted key term; receiving supplementation of an extracted key term; receiving an additional key term; receiving approval of an extracted key phrase; receiving amendment of an extracted key phrase; receiving rejection of an extracted key phrase; receiving supplementation of an extracted key phrase; and receiving an additional key phrase. The supervisor may therefore edit, add or remove extracted key terms and/or phrases so as to enhance the dialogue and ensure that it accurately reflects the input content. This, in turn, may cause the AI model trained using the dialogue to be more accurate and to provide users with information which more accurately answers user queries.

The method may comprise: in response to receiving a request from the supervisor, translating one or more of: the input content, and the dialogue, into a language of a predetermined number of languages. The dialogue may therefore be translated into a number of different languages. The dialogue may be translated at any stage of the process, such as, for example, prior to pre-processing such that the pre-processing of the dialogue may be performed in any of the predetermined languages. The translation may be performed by a third party machine translation service and may be validated by a bilingual/multi-lingual user. Additionally, one or more of: the input content, and the dialogue, may be provided in any language of a predetermined number of languages.

The converting may comprise: converting the input content to a markup language; and further converting the markup language to the data interchange format. The markup language may be Extensible Markup Language (XML). The data interchange format may be JavaScript Object Notation (JSON).

The method may comprise identifying a key term for extraction by determining a term frequency of the term in the input content and determining an inverse document frequency of the term in the input content. The method may comprise identifying a key phrase for extraction by: splitting the input content into a plurality of phrases using a predetermined stop word list; scoring each of the plurality of phrases based on the word frequency and degree of importance of the key phrase; and extracting the phrase in response to the score exceeding a predetermined threshold.

The method may comprise displaying the extracted key terms and the extracted key phrases on a user interface. Validation may be received from the supervisor via the user interface. The user interface may be software provided on a display. The software may be Virtual Communicator Framework. The validator (supervisor) may therefore be presented with the extracted key terms and phrases on a display and may perform validation with an input device, such as for example, a touch screen, computer mouse and keyboard, etc. The extracted terms, extracted phrases and dialogue may be displayed on a JSON viewer, such as, for example, Content Authoring Kit or JSON Lint, so as to visually present the dialogue to the supervisor.

The input content may be one or more of: a user manual; a service manual; an instruction for use manual; and a knowledge repository. The supervisor may be one or more of: a clinician; a healthcare professional; a hospital technician; and a service engineer. The input content may be provided in file formats such as, for example, PDF, Word, html etc. The input content may comprise text; a table; an image; or any combination thereof. Medical device documentation may be documentation used in or associated with equipment used in the medical/clinical/healthcare field.

The extracted key terms and key phrases may correspond to topics of the input content and may be identified as being relevant to the content. The key terms may be extracted using a term frequency-inverse document frequency algorithm. The key phrases may be extracted using a Rapid Automatic Keyword Extraction (RAKE) algorithm. The dialogue may also be referred to as a vocabulary.

According to an embodiment of a second aspect, there is provided an apparatus configured to structure content for training an artificial intelligence model, the apparatus comprising one or more processors and a memory, the one or more processors configured to: receive input content associated with medical device documentation; convert the input content to a data interchange format; extract a plurality of key terms from the converted input content; extract a plurality of key phrases from the converted input content; receive validation of the key terms and the key phrases from a supervisor; and build a dialogue, for training the artificial intelligence model, based on at least some of the validated key terms and the validated key phrases, wherein the dialogue comprises a series of statements.

According to an embodiment of a third aspect, there is provided a computer program which when executed carries out a computer-implemented method of structuring content for training an artificial intelligence model, the method comprising: receiving input content associated with medical device documentation; converting the input content to a data interchange format; extracting a plurality of key terms from the converted input content; extracting a plurality of key phrases from the converted input content; receiving validation of the key terms and the key phrases from a supervisor; and building a dialogue, for training the artificial intelligence model, based on at least some of the validated key terms and the validated key phrases, wherein the dialogue comprises a series of statements.

Features and sub-features of the method and computer program aspects may be applied to the apparatus aspects and vice versa.

According to an embodiment of fourth aspect of the invention there is provided a non-transitory computer-readable medium storing a computer program as described above.

An apparatus or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results.

Elements of the invention have been described using the terms "memory", "processor", etc. The skilled person will appreciate that such terms and their equivalents may refer to parts of the system that are spatially separate but combine to serve the functions defined. Equally, the same physical parts of the system may provide two or more of the functions defined.

For example, separately defined means may be implemented using the same memory and/or processor as appropriate.

### BRIEF DESCRIPTION OF THE DRAWINGS

Exemplary embodiments will now be described, by way of example only, with reference to the following drawings, in which:
Fig. 1 is a flowchart of a method according to a general embodiment of an aspect of the invention;
Fig. 2 is a block diagram of main system components according to a general embodiment of an aspect of the invention;
Fig. 3 is a block diagram of the knowledge management pipeline according to an embodiment of an aspect of the invention;
Fig. 4 is workflow of the stages of the knowledge management pipeline according to an embodiment of an aspect of the invention;
Fig. 5 is an exemplary view of an ultrasound user manual in PDF format;
Fig. 6 is an exemplary view of a dialogue flow in Content Authoring Kit of Virtual Communicator Framework;
Fig. 7 is another exemplary view of a dialogue flow in Content Authoring Kit of Virtual Communicator Framework;
Fig. 8 is an exemplary view of ultrasound user manual data shown in Content Authoring Kit of Virtual Communicator Framework;
Fig. 9 is a block diagram of training a model according to an embodiment of an aspect of the invention;
Fig. 10 is a block diagram of a training phase of a multi-lingual pipeline for Dutch language according to an embodiment of an aspect of the invention;
Fig. 11 is an exemplary view of a model trained on enriched and validated ultrasound user manual data used to answer user questions according to an embodiment of an aspect of the invention;
Fig. 12 is a block diagram of a deployment stage of a multi-lingual pipeline according to an embodiment of an aspect of the invention;
Fig. 13 is a flowchart of a process for creating a language model according to an embodiment of an aspect of the invention; and
Fig. 14 is a hardware diagram illustrating hardware used to implement invention embodiments.

### DETAILED DESCRIPTION OF EMBODIMENTS

Embodiments of aspects may provide a method, apparatus, computer program and system to automate the structuring process of documentation (input content). The structured document comprises verification by an individual with appropriate knowledge and/or qualifications relating to the input content. The structured documents may be further processed to generate an artificial intelligence (AI) knowledge model. Any structure of the original documentation (such as, for example, sections, chapters, etc.) may be preserved such that answers given by an AI system are in a similar fashion that maintains the regulatory approval. Furthermore, an interlinking between chatbot and these AI knowledge models may be provided so that, based on the context, an AI knowledge model may be invoked for a specific topic/issue.

In literature, systems exist which allow a document, such as, a Word document, to be converted into a markup language, such as Extensible Markup Language (XML) format. This allows users to edit the XML tags, and document management solutions to manage the version control. However, these systems lack domain expert input at crucial stages. They are also unable to handle tables, complex images, or detailed instructions in a step-by-step manner, or to control over the scope of text for answer in QA system, link disjointed paragraphs (partial answer extraction, dependencies) etc.

Embodiments of aspects may also provide a method, apparatus, computer program and system of using word embeddings and a language model for processing text in respective native languages. This method may be used in Philips conversational chatbots. Philips has several medical, consumer and personal health products on the market, which involve patient/customer engagement/customer service. A conversational chatbot may deliver many of these interactions.

Having a multi-lingual feature in a conversational chatbot may be immensely beneficial since they may allow chatbots for applications to be created and deployed in different countries and different markets so as to address new customer bases and their various languages. Providing a multiple language option in the chatbot may provide an opportunity to redesign the user experience in specific markets and to appeal to different regions in different ways. This focus on localisation may allow chatbot designers to create bots that are more engaging to a certain culture or region, and are therefore more effective.

A more effective chatbot means that user queries may be answered more accurately and efficiently, which reduces the required number of interactions between the user and the chatbot, thereby reducing the required communications to and from the chatbot and improving the performance of the computer. Furthermore, the user may be able to quickly obtain an answer to a query and proceed with operating, for example, a medical device, and so the behaviour of the user may be altered by an improved chatbot system.

Furthermore, the current approach for handling multilingual natural language processing (NLP) involves translating back and forth between English text and the native language, with a translate algorithm. This is because NLP pipelines for English are more mature than other languages. For processing the native language text, it is first translated to English using any translation service and then the processing is performed on the English text. This may be problematic since it introduces a dependency on the translation service and the context of the native language might be lost in translation, therefore leading to errors in the processing.

Embodiments of aspects may provide one or more of the following:
- An unstructured and regulated unstructured document may be converted for processing by AI systems, such as, for example, chatbot and QA systems.
- A process may be provided to handle tables, instructions and images in mixed modality/multi-modality format.
- A QA system may provide the answer in a regulatory approved document structure.
- An automated pipeline may also allow human domain experts to input and review the processing, thereby ensuring the validity of the processing.
- A knowledge model may be provided that may be plugged in at chatbot dynamically for specific context.
- A multilingual bot may be created from the ground up, where the pipeline may be created and trained in specific languages to reduce the dependency on a translate function for every query provided by a user.
- The bot may also seamlessly switch from one language to another mid-conversation as a multilingual agent.

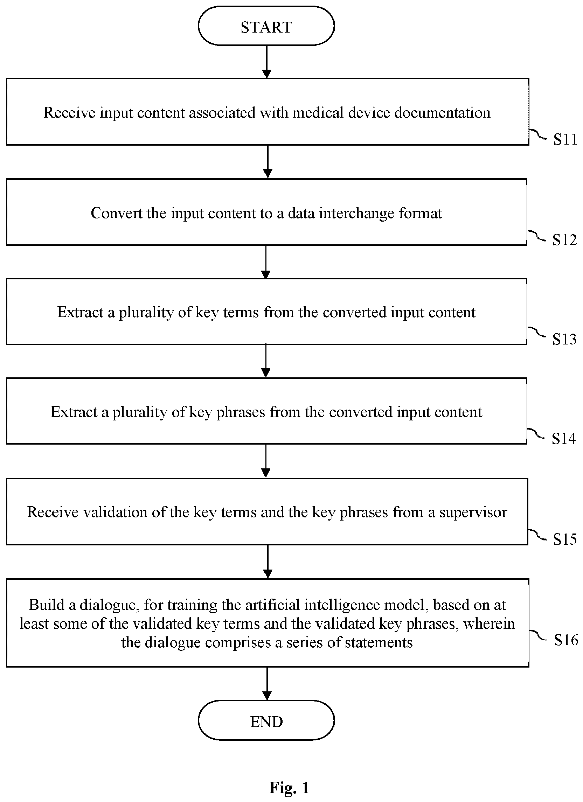

Fig. 1 shows a flow chart representing the computer-implemented method of structuring content for training an artificial intelligence model according to a general embodiment of an aspect of the invention. Firstly, in step S11, input content that is associated with medical device documentation is received. The content may, for example, be received from a remote device, such as a server, via a network or from a storage medium connected to the computer. The input content is then converted to a data interchange format in step S12. Next, a plurality of key terms are extracted from the converted input content at step S13 and a plurality of key phrases are also extracted from the converted input content at S14. At step S15, validation of the key terms and key phrases is received from a supervisor. Finally, in step S16, a dialogue is built for training the artificial intelligence model, based on at least some of the validated key terms and the validated key phrases. The dialogue comprises a series of statements.

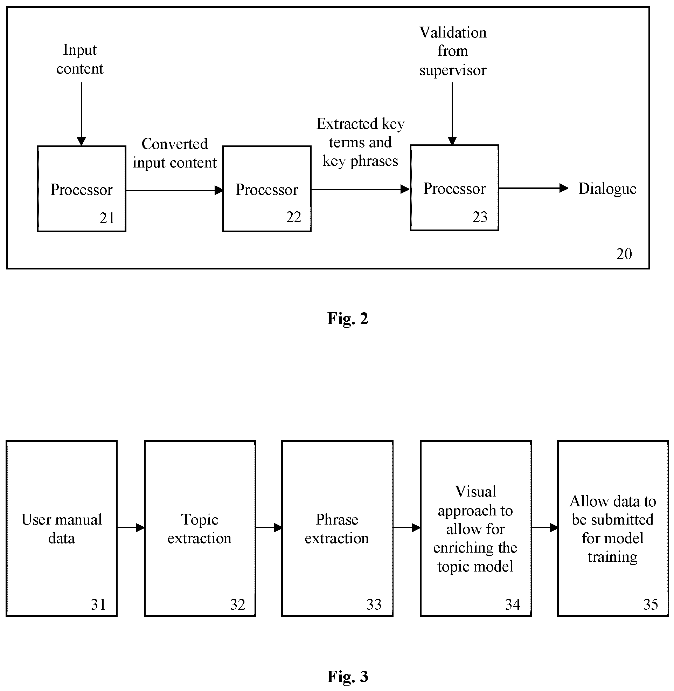

Fig. 2 shows a block diagram of information flow into main system components in apparatus 20. Input content is received and converted to data interchange format by processor 21 to produce converted input content. The converted input content is processed by processor 22 (which may be the same processor as processor 21) to extract a plurality of key terms and key phrases. Validation of the extracted key terms and phrases is received from a supervisor and a dialogue is built based on some or all of the validated key terms and key phrases, with this processing performed by processor 23 (which may be the same as processor 21 and/or 22).

Embodiments of aspects may therefore provide a method of converting any unstructured document into a structured document such that it may be provided as a dialogue flow or may be available for building a model to be used in a Question-Answer (QA) system. Input instructions are received by the computer from an individual acting as a supervisor to validate the dialogue flow and ensure the legitimacy of the extracted terminology of which the dialogue is comprised. This method includes different blocks that may be combined for 1) Topic Extraction 2) Phrase Extraction 3) Visual approach to allow for enriching the topic model 4) Allow the data to be submitted for training a model for QA systems, comprising a Knowledge Management Pipeline.

Fig. 3 shows the main blocks of the process according to an embodiment of an aspect. These blocks are: User Manual Data 31; Topic Extraction 32; Phrase Extraction 33; Visual approach to allow for enriching the topic model 34; and Allow the data to be submitted for training a model for QA systems 35. These blocks may be combined in a Knowledge Management Pipeline. The knowledge ingestion pipeline may convert an unstructured document to structured and enriched user manual data that may be used to build a knowledge model (an AI model) for QA systems.

The user manual data 31 shown in Fig. 3 is equivalent to the input content which is associated with medical device documentation. That is, the medical device documentation may be a user manual for a medical device or a similar associated document in the medical/healthcare field. The software/system documents, written as user and service manuals, are usually in PDF/text format which is typically unstructured or semi-structured. For a chatbot to have a conversation with a user or to answer the queries, the information is required to be in a structured format, either as a dialogue flow or Question-Answer pair.

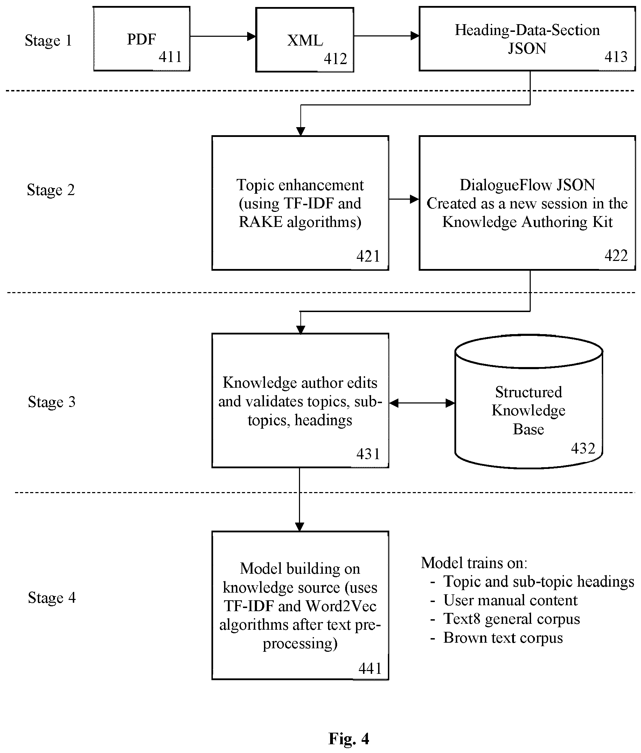

The complete workflow for the Knowledge Management Pipeline is organised in various stages as detailed below. An overview of the different stages of the workflow is shown in Fig. 4.

In the first stage in the pipeline, the input content is received. The input content may be a PDF version of the user manual document at block 411 which is then converted into text xml format along with the images at block 412. This xml document is converted into an equivalent JSON format by the Knowledge Ingestion block at block 413. The ordering of the data into hierarchical structure of topics, subtopics and content as in the PDF version is maintained as in the original format. As well as PDF files, any structured data format, such as html pages, Word documents, may also be supported.

In the second stage, topic enhancement is performed at block 421 by extracting key terms and key phrases, which are then used to create a dialogue flow at block 422. The dialogue flow may be viewed in a JSON viewer such as Knowledge Authoring Kit so that a supervisor may easily view the dialogue. In the third stage, the supervisor (knowledge author) edits and validates the content of the dialogue at block 431 and a structured knowledge base 432 may be used to enrich/supplement the dialogue. Finally, in the fourth stage, a model is built using the validated dialogue at block 441. The main blocks of the invention comprise the stages of this workflow and are detailed below.

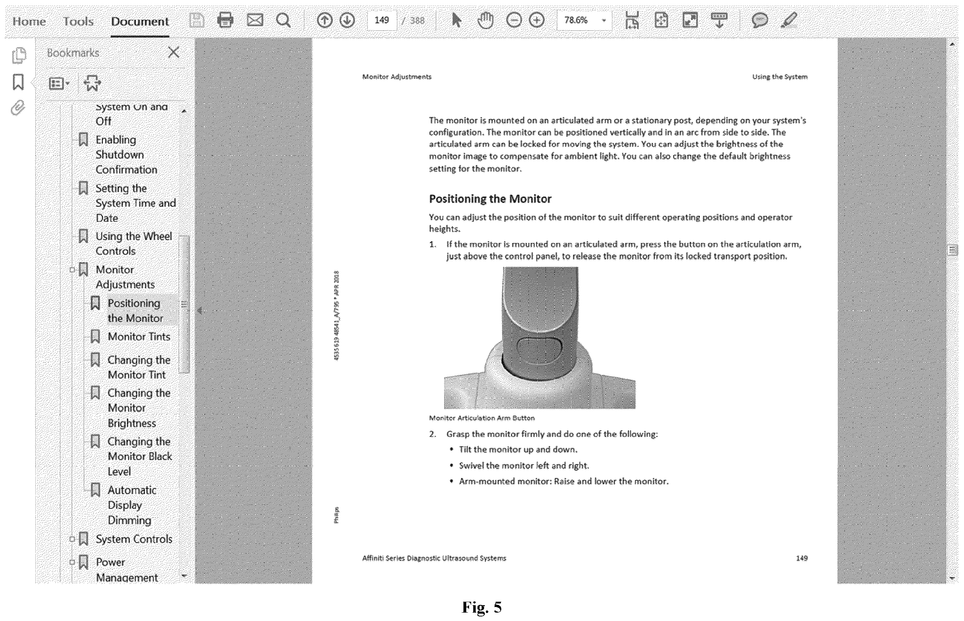

An illustration of all the different blocks according to an embodiment of an aspect of the invention is shown with the example of an ultrasound user manual. Fig. 5 is an exemplary view of an ultrasound user manual in PDF format. The PDF of the ultrasound user manual, shown in Fig. 5, is converted into XML and subsequently into JSON with the Topic, Subtopic and Content Hierarchy maintained.

In the Topic Extraction Block, the JSON formatted data is used as an input. The content of each paragraph is used for the extraction of key words (key topics). This stage is used to capture topic keywords that have not already been captured in the heading but are relevant to the content. These key words/key topics are then appended to the topic headings available in the user manual. In this stage, algorithms like TF-IDF may be used to derive key words or key topics from the content. Algorithms like TF-IDF may provide advantages of simplicity, speed and efficiency over other topic extraction algorithms.

TF-IDF algorithm may be used on paragraphs of a given section of the input content as well as paragraphs from the rest of the document (input content) to identify words that are relatively important in the current content under a topic. The algorithm uses the term frequency and inverse document frequency of a word to determine its importance. TF-IDF is calculated for all the words and the scores for these words are used as weights. The higher the numerical weight value, the rarer the term. The smaller the weight, the more common the term.

As discussed above, tags (key terms and key phrases) may be extracted from the content under sections of the input content, such as chapters, sections, etc. These tags are added along with section headers (identifiers) to enrich them. However, the extraction may also be performed on input content that is not split into sections and is not provided with section headings. The tag extraction could be performed at any granularity (sentence level, paragraph level, document level, etc.) in the absence of headings.

Next, in the Phrase Extraction Block, phrases are extracted from each paragraph of the input content. This block extracts key phrases of length 3 to 5 words that are used in the content. This helps identify the content using the key phrases. When a user/customer queries the system using any of these phrases or semantically similar phrases, the content with the answer may be easily identified. The key phrases extracted in this stage are also added to the headings and topic keywords extracted at the previous stage.

A Rapid Automatic Keyword Extraction (RAKE) algorithm may be used to extract the key phrases. The RAKE algorithm uses a list of standard and some custom stop words to split sentences into key word phrases. The content under a topic or subtopic is split into key word phrases using the stop word list. These key word phrases are then scored based on the word frequency and the degree of importance. The calculated scores for the key word phrases are used to rank these phrases. Finally only the phrases that exceed a threshold score, such as of 4.0, are selected.

Key words (terms) and key phrases are therefore extracted from the content using TF-IDF and RAKE algorithms and are added to the topic nodes. These nodes may be provided in accordance with the section headings of the input content.

The next block is the Visual Representation Block. In this block, the user manual data enhanced with topic key terms and phrases is visually represented in a format of topic, subtopic and content nodes that allows the knowledge author (supervisor) to view the content easily and validate the enhanced user manual data. The knowledge author is a user who understands the input content and is able to verify that the extracted terms and phrases correspond to the topic. If, for example, the input content is a user manual for a medical diagnosis machine, then the knowledge author (supervisor) may be a technician qualified to operate the machine or may be a medical professional with an understanding of the diagnosis method of the machine and the underlying physiological considerations associated with the diagnosis method. The knowledge author may also enrich the data further by adding or editing the individual topics or content nodes or removing topic key terms that may not be appropriate and/or required for model training. The output of this stage is enriched and validated data.

A Virtual Communicator Framework (VCF) has been developed that includes the building blocks which, when combined, enable the creation of highly engaging and dynamic multi-modal dialogue flows for chatbot deployments in different languages. The Building Blocks of the VCF are Content Authoring Kit and the Knowledge Ingestion Pipeline, both provided with multi-lingual support.

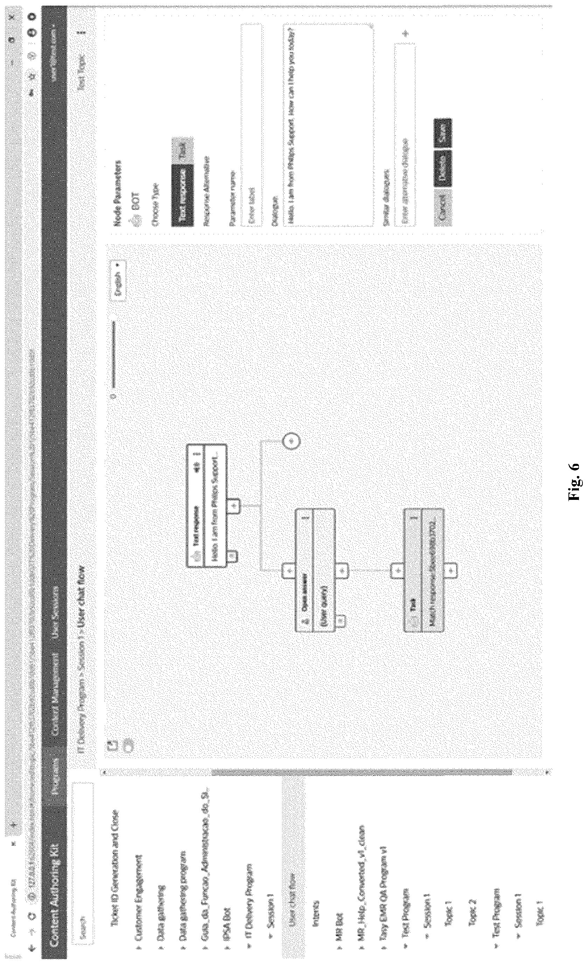

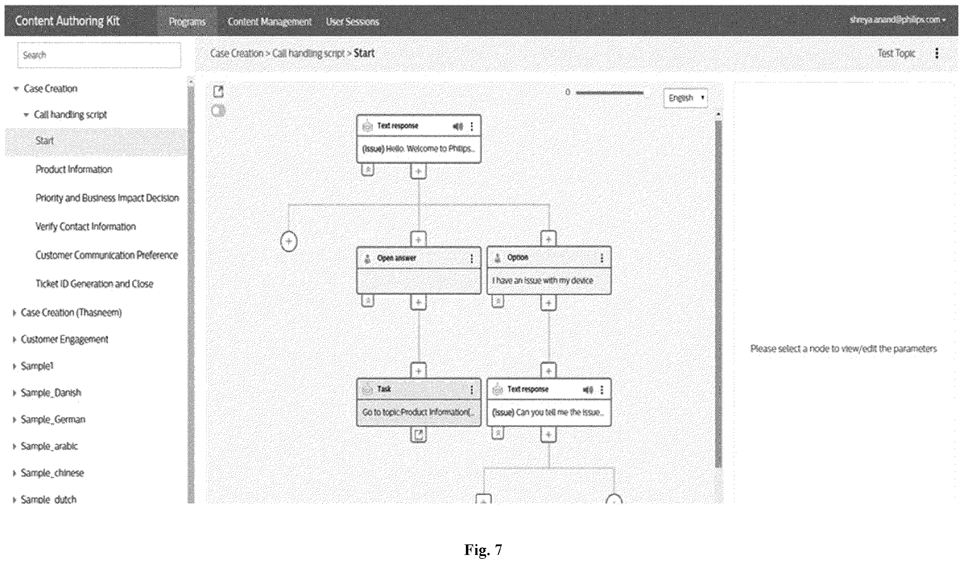

The Content Authoring Kit block of the Virtual Communicator Framework, shown in Fig. 6 and Fig. 7, may allow the user to create, visualise, test and manage dialogue flow scripts for chatbot deployments. The tool has a highly user-friendly tree based visualisation of the dialogue flow script that complies with Philips user interface guidelines. This allows content writers to focus on the dialogue contents in a better way. This dialogue may be best viewed and edited using the content authoring kit of VCF but may also be viewed and edited using any generic JSON viewer, such as, for example, JSON Lint.

The Knowledge Ingestion block of the Virtual Communicator Framework may allow for the ingestion of an unstructured document to the framework and its conversion into a structured knowledge model, which may be used for question and answering systems. The pipeline follows a structured approach to make the process as generic as possible so that it may be applied to as many types of documents as possible.

The multilingual feature of the NLP pipeline in the VCF framework ensures that dialogue flow scripts created in one of the supported languages may be made available and executable in all of the supported languages, without any loss of data. An embodiment of an aspect may provide a system and method for implementing this multilingual feature in this VCF framework. The languages supported using this natural language processing (NLP) pipeline may comprise English, Dutch, German, French, Spanish, Russian, Chinese, Arabic, Hindi, Portuguese, and Danish.

The Virtual Communicator Framework (VCF) enables the creation of highly engaging and dynamic multi-modal dialogue flows for chatbot deployments in different languages. The two main building blocks of the VCF are Content Authoring Kit and the Knowledge Ingestion Pipeline, both with multi-lingual support.

The framework (VCF) follows a flexible architecture that allows addition/use of services and features based on different use cases. The Content Authoring Kit block of the VCF, shown in Fig. 6, allows the user to create, visualise, test and manage dialogue flows that may be used for chatbot deployments. The tool provides a highly user-friendly tree based visualisation of the dialogue. This may allow content writers to focus on the dialogue contents in a better way. The framework may be used to link to QA systems and knowledge systems, via, for example, a REST service.

The user manual is converted to a Content Authoring Kit compatible format and may be accessed by the knowledge author (supervisor) for adding, removing, or enriching any of the topic or content nodes. That is, the supervisor validation and enrichment may add domain words/phrases or targeted words/phrases to the sections. The input of the knowledge author therefore ensures the validity of the extracted terms and phrases, and improves the resulting dialogue. Conversely, however, the validation by the supervisor is not essential to the process and the input content may be structured without the user validation. Removal of the validation may result in less accurate structuring however.

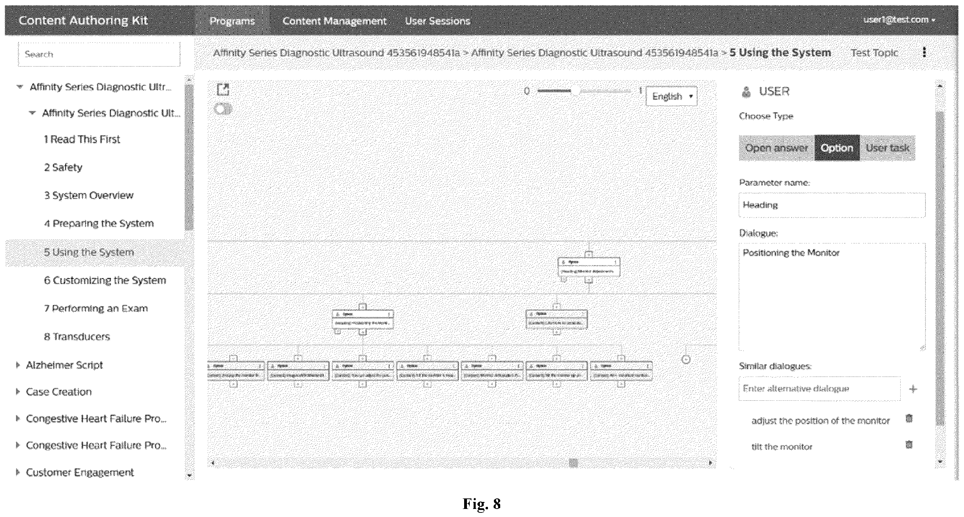

Fig. 8 shows an exemplary view of an ultrasound user manual represented in the Content Authoring Kit. All the main topic headings of the user manual may be viewed on the left panel. Here the main topic "Using the System" is selected and is being viewed. The subtopic headings "Monitor Adjustments" and "Positioning the Monitor" are being displayed with the corresponding content nodes under them. The right panel shows the selected node - "Positioning the Monitor" - and this node has been enhanced with the terms "adjust the position of the monitor" and "tilt the monitor" using the Topic Enhancement and Phrase Enhancement blocks.

The next block is Vocabulary Building for Model Training. In this final block of the workflow, the vocabulary (dialogue) is built on this validated data of the user manual. As discussed above, the supervisor may validate and enrich the dialogue flow in the content authoring kit. For example, the supervisor may add synonyms and/or edit the dialogue. The dialogue may be provided as a dialogue flow comprising a series of statements and may then be further used to train a model. Conversely, the dialogue flow may also be used to create a chatbot, which may not require training.

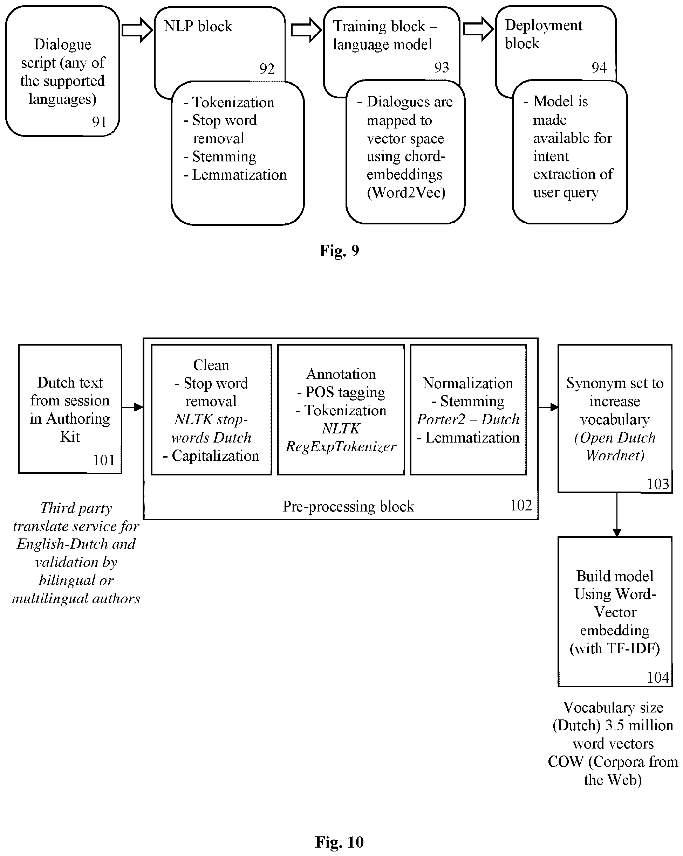

The content may then be submitted for training. Here an algorithm may be used for pre-processing which includes sub processes such as, for example: Tokenization, Stop word removal, Lemmatization, Punctuation removal. Fig. 9 shows a block diagram of the process of training a model based on the dialogue. Fig. 9 comprises receiving the dialogue script at block 91, performing NLP processing at block 92, training the language model at block 93 and deploying the model for user queries at block 94.

The dialogue may first be pre-processed, and the dialogue may further be enriched by supplementing the dialogue with additional related terminology. The pre-processing may be performed in each of the languages supported by the NLP pipeline, and the pre-processing block comprises sub-blocks for cleaning, annotating and normalizing the dialogue script. This is then followed in the pipeline by a synonym set block, which is used to increase the training corpus in terms of alternative texts to chat texts in the dialogue flow script.

General text corpora, such as Text8 and Brown General Corpus, may also be used to supplement the vocabulary after the pre-processing of the input content. Additionally, some key words or domain specific words that may be used in the user manual (input content) but may be unavailable as part of vector embeddings are classified as Out of Vocabulary (OOV) or domain related words. Instead of ignoring or excluding these domain words, which would lead to loss of information and semantics, the vocabulary building block may generate vector embeddings for these OOV or domain related words. The OOV and domain related words for a given document (input document) may be determined in advance and provided with the information of the document.

In the training phase, the built dialogue is pre-processed and a language model corresponding to the dialogue is created. A dialogue comprises a series of statements. The dialogue may be referred to as a dialogue flow script which is a collection of statements used in a script to guide a user through a conversation with the chatbot to solve a particular issue or set of issues.

The training phase blocks in the pipeline shown in Fig. 10 are for the Dutch language and similar pipelines have been created for all the languages supported by the NLP pipeline. In Fig. 10, the Dutch text is received in block 101, the text is cleaned, annotated and normalized in the pre-processing block 102, the vocabulary is enhanced in block 103 and the model is built at block 104. The Content Authoring Kit enables content authors to create detailed dialogue flow scripts. Each statement (single/multiple sentences) within this flow represents a user intent.

The initial block in the training phase, which resides in the Content Authoring Kit, helps to either create dialogue flow scripts in any of the supported languages or translate the dialogues from one language to another using third-party translate services. As discussed above, the dialogue flow scripts may be visualised in the Content Authoring Kit. This enables bilingual or multilingual authors to validate the content before initiating the training process, thereby ensuring the validity to meet regulation standards.

Once the vocabulary is built and pre-processed, training of the Word2Vec model may be initiated. The language model is built for the dialogue flow for each of the supporting languages using word vector embedding. Building the language model (the AI model) may comprise the following steps:
- Each sentence (statement) in the text content (dialogue) is split into words.
- For each of the words, the respective word-embedding vector in that target language is multiplied with its corresponding TF-IDF score.
- These vectors are then averaged to get the sentence level vector (statement vector).
- All these sentence level vectors constitute a target language model for the text content.
- Such models are built and stored for each of the languages required and the same models are used in the deployment stage to respond to user queries.

The vocabulary sizes for the embeddings in each of the languages are shown in Table 1 below. The large vocabulary size provides adequate coverage of word embeddings in these languages.

**Table 1: Vocabulary sizes for Embeddings in various languages**

| **Language** | **Vocabulary Size** |
|---|---|
| Dutch | 3.5M |
| German | 1.5M |
| French | 1.1M |
| Chinese | 2.1M |
| Arabic | 610k |
| Spanish | 1M |
| Portuguese | 600k |
| Hindi | 200k |
| Danish | 350k |
| English | 2.2M |

A neural network with a single hidden layer (model) is used train on the vocabulary to predict the current word based on the context. The goal is to learn the weights of the hidden layer. These weights are essentially the word vectors that we are trying to learn. The resulting learned vectors are the embeddings - features that describe the target word. These embeddings are stored as the trained model. This trained model is ready for any question and answering systems.

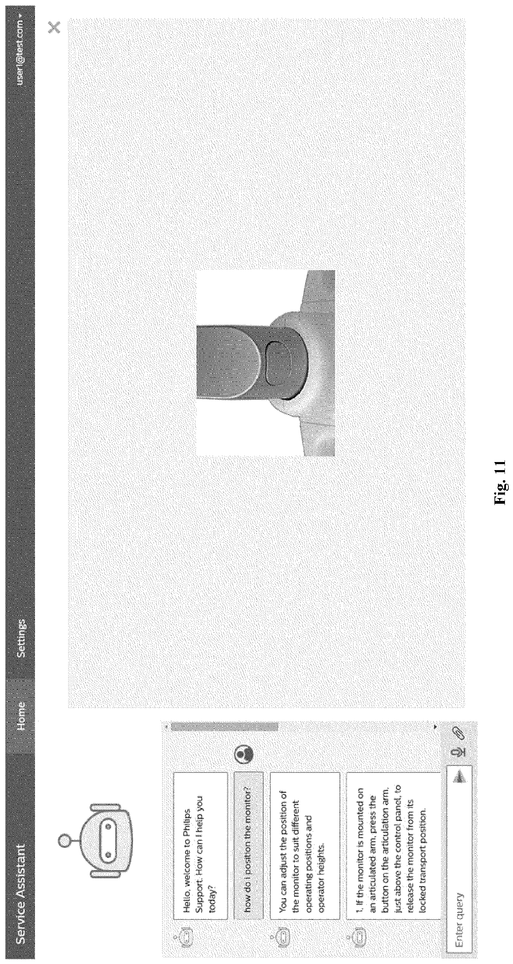

A Vector Embedding (Word2Vec) Model is trained on the Vocabulary created from the User Manual content and the trained model is used to answer user queries. Fig. 11 shows an example of using a model trained on enriched and validated ultrasound user manual data to answer customer questions. A user may interact with the model built on user manual data to get any queries related to the product answered. This may be referred to as the deployment phase.

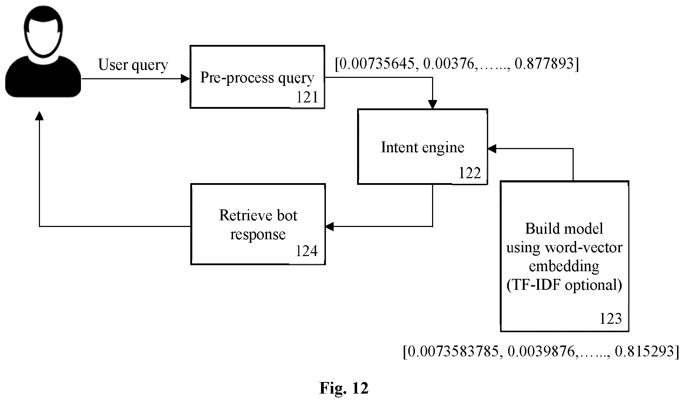

The deployment phase blocks of the pipeline are shown in Fig. 12. The deployment pipeline accepts user queries in any of the supported languages. These user queries in a particular language are pre-processed using the corresponding language pipeline at block 121. The intent of the query is determined by the intent engine at block 122 using the built model at block 123. Finally, a response to the query is retrieved at block 124 based on the intent and is provided to the user.

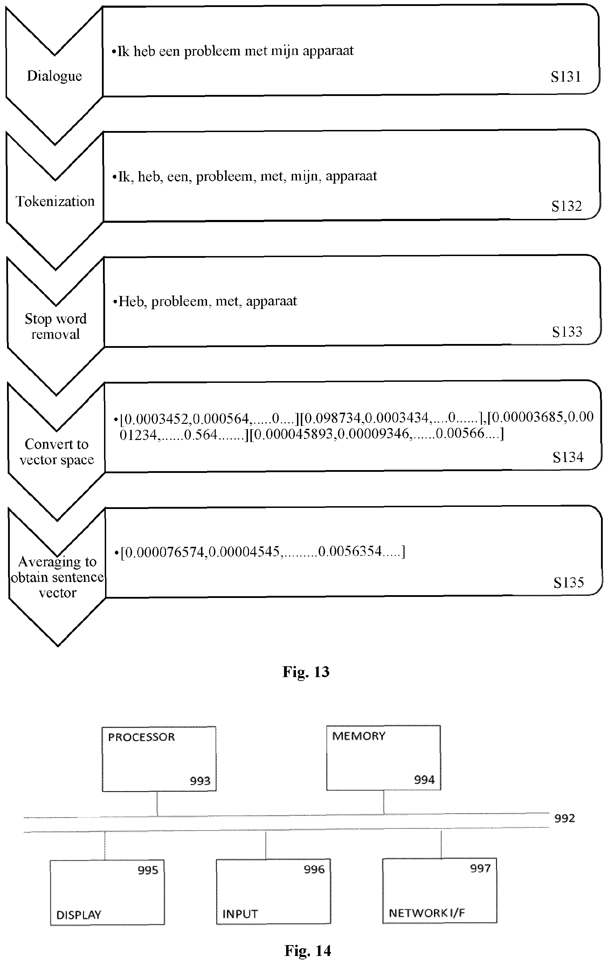

Fig. 13 shows an example of a language model creation for a dialogue in a script for the Dutch text "I have a problem with my device". The query is received at step S131 and pre-processing is performed at step S132 and step S133. Specifically, tokenization and stop word removal are performed on the query. The pre-processed terms are then converted to the vector space at step S134 and the sentence vector for the query is obtained at step S135 by averaging the individual word vectors.

Thus, in the deployment stage, a query is received and the intent of the query is determined such that an appropriate response may be determined and provided to the user. The intent engine:
- Uses the appropriate language model to convert the pre-processed user query into a sentence vector in the same manner as described in the training stage.
- Then calculates a cosine distance score between this user query vector and trained dialogue level vectors (statement vectors of the trained model) to identify user intent. The chatbot responds with the next statement as per the identified intent in the dialogue flow script.

Thus, the pre-processed query is passed to a match method. This method in turn uses distance measures (Cosine similarity) to identify the nearest response present in the trained model.

Accordingly, a document that is not structured for AI processing may be structured to determine a dialogue flow, and then the dialogue may be used to train a model which is used to determine a response to a query from a user. The built dialogue may be self-contained and regulatory approved for a specific query for the said medical device to which the input content corresponds. The document may therefore be utilised by an AI chatbot/QA system without the input document needing to be manually processed. The determination of the dialogue is automated and may be enhanced by input from a user (supervisor) to validate and enrich the dialogue. This processing may be performed in any supported language without relying on external translations, such as machine translations.

The dialogue may then be used to develop a language model (AI model) in any supported language which may be deployed in a chatbot/QA system. A user may provide a query to the AI model and the query may be pre-processed using the same pre-processing method that is used to train the model, and the model and the pre-processed query may be used to determine a response to the query, from the input content. The query and response process may also be performed in any supported language.

The system may therefore allow an individual to validate and enhance the dialogue, while allowing a user to receive an accurate response to a query in an efficient manner. The dialogue and the response are derived from the input content.

Fig. 14 is a block diagram of a computing device, such as a server incorporating resources suitable for language and AI processing, which may embody the present invention, and which may be used to implement a method of structuring content for training an artificial intelligence model. The computing device comprises a processor 993, and memory 994. Optionally, the computing device also includes a network interface 997 for communication with other computing devices, for example with other computing devices of invention embodiments.

For example, an embodiment may be composed of a network of such computing devices. Optionally, the computing device may also include one or more input mechanisms such as a keyboard and mouse 996 for the user to input any of, for example, validations/edits of key terms or key phrases, and a display unit such as one or more monitors 995. The display unit may show a representation of data stored by the computing device for instance, representations of the dialogue flow, the trained model, chatbot or QA system, or the Content Authoring Kit of the VCF. The display unit 995 may also display a cursor and dialogue boxes and screens enabling interaction between a user and the programs and data stored on the computing device. The input mechanisms 996 may enable a user to input data and instructions to the computing device. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions described here and in the claims. Such processing operations include receiving input content, which may be associated with medical device documentation; converting the input content to a data interchange format; extracting a plurality of key terms from the converted input content; extracting a plurality of key phrases from the converted input content; receiving validation of the key terms and the key phrases from a supervisor; and building a dialogue, for training the artificial intelligence model, based on at least some of the validated key terms and the validated key phrases.

The memory 994 stores data being read and written by the processor 993, such as the inputs (such as, for example, the input content), interim results (such as, for example, extracted key terms and phrases, and statement vectors) and results of the processes referred to above (such as, for example, the dialogue, and the trained model). As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device such as that illustrated in Fig. 14. Such a computing device need not have every component illustrated in Fig. 14 and may be composed of a subset of those components. A method embodying the present invention may be carried out by a single computing device in communication with one or more data storage servers via a network. The computing device may be a data storage itself storing the input content before and after processing and thus for example, the dialogue and/or trained model.

A method embodying the present invention may be carried out by a plurality of computing devices operating in cooperation with one another. One or more of the plurality of computing devices may be a data storage server storing at least a portion of an AI model.

Other hardware arrangements, such as laptops, iPads and tablet PCs in general could alternatively be provided. The software for carrying out the method of invention embodiments as well as input content, and any other file required may be downloaded, for example over a network such as the internet, or using removable media. Any dialogue or trained model may be stored, written onto removable media or downloaded over a network.

The invention embodiments may be applied to any field that requires structuring of content for AI processing. The invention embodiments may preferably applied to the medical and healthcare field.

Artificial neural networks are widely employed to perform pattern matching and diagnostic procedures, using so-called "machine learning". A typical structure of an artificial neural network is a three-layer structure, having an input layer at which observations are input to the network, a hidden or processing layer, at which further processing operations are carried out on information received from the input layer, and an output layer, at which an output signal is generated based on information received from the processing layer. The precise structure of the artificial neural network is not limited, neither are the specific functions of the layers.

A suitable neural network system may include a training processor which utilises test data and annotated data to generate a trained model for an AI system, which trained model is accessible by an AI system. Detection is performed with reference to a similarity value computation processor.

Such a system comprises a hardware architecture such as that illustrated in Fig. 14 (described above), which may be used for training a model using the dialogue. In particular, processor 993 may perform the processing instructions for training the model, determining the intent of a user query and providing the response and the associated processing. One or more storage units (memories) 994 store the processing instructions, the trained model query response and the dialogue.

Variations to the disclosed embodiments may be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method of structuring content for training an artificial intelligence model, the method comprising:
receiving (S11) input content associated with medical device documentation;
converting (S12) the input content to a data interchange format;
extracting (S13) a plurality of key terms from the converted input content;
extracting (S14) a plurality of key phrases from the converted input content;
receiving (S15) validation of the key terms and the key phrases from a supervisor; and
building (S16) a dialogue, for training the artificial intelligence model, based on at least some of the validated key terms and the validated key phrases, wherein the dialogue comprises a series of statements.

2. The method of claim 1, comprising:
pre-processing the dialogue, wherein
the pre-processing comprises one or more of:
cleaning the dialogue;
annotating the dialogue; and
normalizing the dialogue.

3. The method of claim 2, wherein
cleaning the dialogue comprises one or more of: stop word removal, and capitalization;
annotating the dialogue comprises one or more of: Part of Speech tagging, and tokenization; and
normalizing the dialogue comprises one or more of: stemming, and lemmatization.

4. The method of any preceding claim, comprising:
enriching the dialogue, wherein
the enriching comprises one or more of:
identifying and extracting a term from a general text corpus associated with one or more of the extracted key terms;
identifying and extracting a phrase from a general text corpus associated with one or more of the extracted key phrases;
identifying and extracting an out of vocabulary term associated with the input content;
identifying and extracting a domain related term associated with the input content; and
adding an out of vocabulary term by providing a domain specific equivalent key term.

5. The method of any preceding claim, comprising:
training the artificial intelligence model using the dialogue, wherein
the training comprises:
for each statement of a plurality of statements of the dialogue, splitting the statement into a plurality of individual words;
determining a word-embedding vector for each word of the plurality of individual words of the statement;
determining a term frequency - inverse document frequency score for each word of the plurality of individual words of the statement;
multiplying, for each word of the plurality of individual words, the word embedding vector and the respective term frequency - inverse document frequency score to acquire a weighted word vector for each word of the plurality of individual words of the statement;
averaging the plurality of weighted word vectors to acquire a statement vector corresponding to the statement of the dialogue; and
assembling a plurality of statement vectors corresponding to the plurality of statements of the dialogue to provide the trained artificial intelligence model.

6. The method of claim 5, wherein
the artificial intelligence model is trained in a language of a predetermined number of languages; and
the language corresponds to the language of the dialogue used to train the artificial intelligence model.

7. The method of claim 5 or 6, further comprising:
receiving a query from a user;
pre-processing the query;
determining a query vector of the query;
identifying an intent of the query by comparing the query vector with the statement vectors of the trained artificial intelligence model; and
determining a response to the query based on the determined intent.

8. The method of claim 7, wherein
identifying the intent comprises calculating a cosine distance between the query vector and each statement vector of a plurality of the statement vectors of the trained artificial intelligence model; and
determining the response comprises selecting a statement of the dialogue nearest to the statement corresponding to the statement vector which matches the query vector.

9. The method of claim 7 or 8, wherein
the query is received in a language of a predetermined number of languages; and
an artificial intelligence model corresponding to the language is used to determine the response.

10. The method of any preceding claim, wherein
the input content has a structure comprising a plurality of sections;
key terms are extracted from one or more sections of the plurality of sections;
key phrases are extracted from one or more sections of the plurality of sections; and
the key terms and the key phrases for a given section are stored in accordance with an identifier for the given section.

11. The method of any preceding claim, wherein the validation comprises one or more of:
receiving approval of an extracted key term;
receiving amendment of an extracted key term;
receiving rejection of an extracted key term;
receiving supplementation of an extracted key term;
receiving an additional key term;
receiving approval of an extracted key phrase;
receiving amendment of an extracted key phrase;
receiving rejection of an extracted key phrase;
receiving supplementation of an extracted key phrase; and
receiving an additional key phrase.

12. The method of any preceding claim, comprising:
in response to receiving a request from the supervisor, translating one or more of: the input content, and the dialogue, into a language of a predetermined number of languages.

13. An apparatus (20) configured to structure content for training an artificial intelligence model, the apparatus comprising one or more processors (21, 22, 23) and a memory, the one or more processors configured to:
receive input content associated with medical device documentation;
convert the input content to a data interchange format;
extract a plurality of key terms from the converted input content;
extract a plurality of key phrases from the converted input content;
receive validation of the key terms and the key phrases from a supervisor; and
build a dialogue, for training the artificial intelligence model, based on at least some of the validated key terms and the validated key phrases, wherein the dialogue comprises a series of statements.

14. A computer program which when executed carries out a computer-implemented method of structuring content for training an artificial intelligence model, the method comprising:
receiving (S11) input content associated with medical device documentation;
converting (S12) the input content to a data interchange format;
extracting (S13) a plurality of key terms from the converted input content;
extracting (S14) a plurality of key phrases from the converted input content;
receiving (S15) validation of the key terms and the key phrases from a supervisor; and
building (S16) a dialogue, for training the artificial intelligence model, based on at least some of the validated key terms and the validated key phrases, wherein the dialogue comprises a series of statements.

15. A non-transitory computer-readable medium storing a computer program according to claim 14.
